# EUROPEAN PATENT APPLICATION

(11) **EP 3 862 952 A2**
(43) Date of publication of application: **11.08.2021**
(21) Application number: 21179546.3
(22) Date of filing: 15.06.2021
(51) Int. Cl.: G06Q 20/06, G06Q 20/28

(54) **PAYMENT PROCESSING METHOD AND APPARATUS FOR BLOCKCHAIN, ELECTRONIC DEVICE AND MEDIUM**

(30) Priority: 17.07.2020 CN 202010688994
(71) Applicant: BAIDU ONLINE NETWORK TECHNOLOGY (BEIJING) CO., LTD., Beijing 100085 (CN)
(72) Inventor: XIAO, Wei, Haidian District, Beijing, 100085 (CN)
(74) Representative: Zimmermann, Tankred Klaus

(57) **Abstract**

The present disclosure provides a payment processing method for a blockchain, including: obtaining (S101, S201) a service request initiated by a blockchain account; determining (S102, S202) a charge to be paid for the service request in a process of executing the service request; validating (S103, S205) whether a sum of account balance in the blockchain account and a credit currency line satisfies a payment condition according to the charge to be paid, in which the account balance is an amount of digital currency held by the blockchain account, and the amount of digital currency is positive or negative; and when the sum of the account balance and the credit currency line satisfies the payment condition, determining (S104, S206) a digital currency to be paid from the blockchain account, and transferring the digital currency to be paid to a receiver account.

## Description

### FIELD

The present disclosure relates to a field of computer technologies, particularly to a field of blockchain technologies, and more particularly to a payment processing method and apparatus for a blockchain, an electronic device and a storage medium.

### BACKGROUND

At present, blockchain technologies have been applied in more and more business scenarios, involving data storage, data calculation, transfer transactions and other business scenarios.

A payment link may be involved in various business scenarios, and a link of paying service charge to a block-producing node may also be involved during the operation of the blockchain. In different business scenarios, time requirements, object requirements, and cost requirements for fee payment may be different. However, the current single payment mode of the blockchain cannot support such flexible and changeable business scenarios.

### SUMMARY

Embodiments of the present disclosure provides a payment processing method and apparatus for a blockchain, a device and a medium, which can enrich service modes of the blockchain.

According to an aspect of the present disclosure, a payment processing method for a blockchain is provided. The method is applied to a blockchain node and includes: obtaining a service request initiated by a blockchain account; determining a charge to be paid for the service request in a process of executing the service request; validating whether a sum of account balance in the blockchain account and a credit currency line satisfies a payment condition according to the charge to be paid, in which the account balance is an amount of digital currency held by the blockchain account, and the amount of digital currency is positive or negative; and when the sum of the account balance and the credit currency line satisfies the payment condition, determining a digital currency to be paid from the blockchain account, and transferring the digital currency to be paid to a receiver account.

According to another aspect of the present disclosure, a payment processing apparatus for a blockchain is provided. The apparatus is configured on a blockchain node and includes: a first obtaining module, configured to obtain a service request initiated by a blockchain account; a determining module, configured to determine a charge to be paid for the service request in a process of executing the service request; a validation module, configured to validate whether a sum of account balance in the blockchain account and a credit currency line satisfies a payment condition according to the charge to be paid, in which the account balance is an amount of digital currency held by the blockchain account, and the amount of digital currency is positive or negative; and a transferring module, configured to, when the sum of the account balance and the credit currency line satisfies the payment condition, determine a digital currency to be paid from the blockchain account, and transfer the digital currency to be paid to a receiver account.

According to another aspect of the present disclosure, an electronic device is provided. The electronic device includes at least one processor; and a memory communicatively connected with the at least one processor. The memory has instructions executable by the at least one processor stored thereon. The instructions are executed by the at least one processor, so as to cause the at least one processor to perform the payment processing method for a blockchain according to any embodiments of the present disclosure.

According to another aspect of the present disclosure, a non-transitory computer-readable storage medium storing computer instructions is provided. The computer instructions are used to make the computer execute the payment processing method for a blockchain according to any embodiments of the present disclosure.

With the technical solution of the present disclosure, by validating the sum of the account balance and the pre-configured credit currency line when making a payment for the service request, when the validation is passed, the charge for processing the service request can be paid, so that the digital currency within the credit currency line is used for pre-payment when the account balance is insufficient, which solves the problem of the inability to use the blockchain network to process a service request caused when the account balance is insufficient in the related art, supporting flexible and changeable service scenarios, increasing the diversity of payment modes in the blockchain network, enabling advance credit payment, and improving the efficiency of blockchain network payment.

It would be understood that, the content described herein is not intended to identify the key or important features of the embodiments of the present disclosure, nor is it intended to limit the the present disclosure. Other features of the present disclosure will be easily understood through the following description.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

The drawings are for better understanding of the present disclosure and do not constitute a limitation to the present disclosure, in which:
Fig. 1 is a flow chart of a payment processing method for a blockchain according to an embodiment of the present disclosure;
Fig. 2 is a flow chart of a payment processing method for a blockchain according to another embodiment of the present disclosure;
Fig. 3 is a block diagram of a payment processing apparatus for a blockchain according to an embodiment of the present disclosure; and
Fig. 4 is a schematic diagram of an electronic device according to an embodiment of the present disclosure.

### DETAILED DESCRIPTION

The exemplary embodiments of the present disclosure are described below with reference to the accompanying drawings, which include various details of the embodiments of the present disclosure to facilitate understanding, and should be regarded as merely exemplary. Therefore, those skilled in the art should appreciate that various changes and modifications can be made to the embodiments described herein. Likewise, for clarity and conciseness, descriptions of well-known functions and structures are omitted in the following description.

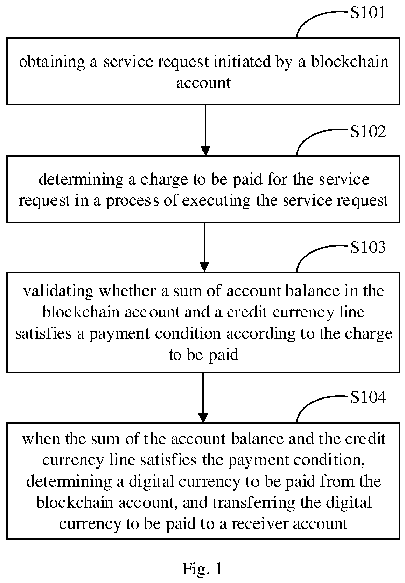

Fig. 1 is a flow chart of a payment processing method for a blockchain. This embodiment may be applied to a situation where a node in a blockchain network uses account balance and credit currency line of a blockchain account to pay for a service request in a blockchain. The method in this embodiment may be executed by a payment processing apparatus for a blockchain. The apparatus can be implemented in software and/or hardware, and can be configured on a blockchain node. The blockchain node can be deployed on an electronic device controlled by any unit or individual in the blockchain network.

The blockchain network may a public blockchain, a consortium blockchain, a private blockchain. The blockchain network generally includes multiple blockchain nodes. The blockchain network adopts a distributed transaction processing method. Generally, a block-producing node is determined through a consensus mechanism within a period of time, and the block-producing node performs service processing during this period of time to generate a block, and provides the block to other nodes in the blockchain network for block validation. After the validation is passed, the generated block is added to the blockchain network. The consensus mechanism is used to screen out block nodes from the block chain nodes of the block chain network. In detail, all block chain nodes perform calculations together based on a unified algorithm to determine the block-producing node.

As illustrated in Fig. 1, the method includes the following.

At block S101, a service request initiated by a blockchain account is obtained.

Digital currency may flow between blockchain accounts. The blockchain account may refer to a digital wallet account in a blockchain network. A user may transfer digital currency in and out through a blockchain account.

The service request is processed by a blockchain node. The generated service request is added into a block. The service request may include, but is not limited to, a data storage request, a data query request, and a data update request, such as a transaction request or a copyright registration information processing request, etc.

The service request is associated with a blockchain account, and the service request may refer to a service request for a certain business initiated by a blockchain account.

At block S102, a charge to be paid for the service request is determined in a process of executing the service request.

The charge to be paid may refer to a charge required for processing the service request. The charge to be paid may include at least one of: a transfer amount when the service request includes a transaction request, and a service charge required by the blockchain network to process the service request. The charge to be paid is generally paid to a block-producing node.

Alternatively, determining the charge to be paid for the service request in the process of executing the service request includes: in the process of executing the service request, determining at least one of a charge to be transferred to a receiver for the service request and a service charge to be transferred to a current block-producing node as the charge to be paid.

The charge to be transferred to the receiver for the service request may refer to a transfer amount when the service request includes a transaction request. The service charge of the current block-producing node may refer to a charge for the current block-producing node to perform a block-producing operation on the service request. An object of payment of a blockchain account may include a payee and/or an account to which the current producing block node belongs.

On the one hand, when the service request is a transaction request of digital currency in the blockchain network, the charge to be paid includes a transaction amount of digital currency.

On the other hand, generally, when a blockchain account request service of the blockchain network, a service charge is required for this service. This service is used to process the service request, generate a block and provide the generated block to other blockchain nodes for validation, and add the block to the blockchain. That is, during processing the service request, the current block-producing node performs a block production operation on the service request initiated by a blockchain account when the blockchain account pays the service charge.

By determining the charge to be paid as the charge transferred to a receiver/payee and/or the service charge of the current block-producing node as the charge to be paid, usage fees and transfer amounts on the blockchain network are covered, thereby the amount of the charge to be paid is accurately determined, avoiding omission of payments, thus ensuring the correct processing of service request.

At block 103, it is validated whether a sum of account balance in the blockchain account and a credit currency line satisfies a payment condition according to the charge to be paid. The account balance is the amount of digital currency held by the blockchain account. The amount of digital currency may be positive or negative.

The account balance may refer to the amount of digital currency held by the blockchain account. The digital currency held by the blockchain account may be transacted with other blockchain accounts. The credit currency line may refer to the highest amount of digital currency that a credit server provides to the blockchain account within a set time period. The credit currency line cannot be transacted with other blockchain accounts.

In blockchain networks of different systems, the implementation protocols of digital currency may be different. Alternatively, the digital currency is unspent transaction output (UTXO). The transaction of the blockchain network consists of transaction input and transaction output. Each transaction may spend an input and produce an output, and the output produced is "unspent transaction output", i.e., the UTXO. For example, the amount of digital currency may be 57. In the embodiment of the present disclosure, the amount of UTXO may be a negative value, for example, it may be -12. UTXO is a commonly used type of digital currency in the blockchain network. The digital currency is configured as UTXO, and the amount of UTXO is allowed to be negative. It can be improved based on the existing UTXO, reducing the difficulty of developing credit currency lines, and making it easy for population and application of credit currency lines.

The sum of the account balance and the credit currency line is actually a total amount of digital currency that is available for the blockchain account. The payment condition is used to determine whether the blockchain account can pay the charge to be paid. For example, the payment condition is used to determine whether the sum of the account balance and the credit currency line is sufficient to pay the charge to be paid.

That is, in addition to a positive digital currency held by the blockchain account, the blockchain account can also use a digital currency within the credit currency line for transaction. The account balance may be a negative value, and an absolute value of a minimum value of the account balance is the same as the credit currency line, that is, the sum of the minimum value of the account balance and the credit currency line is 0.

In the related art, the account balance of the blockchain account cannot be a negative value. When the account balance is 0, a negative value or less than the charge to be paid, the blockchain account cannot obtain the service of the blockchain network. That is, the service request initiated by the blockchain account cannot be processed by the blockchain network. The blockchain network may be instructed to process the service request initiated by the blockchain account only when the blockchain account holds a sufficient amount of digital currency.

In the embodiments of the present disclosure, in a condition where the blockchain account holds the credit currency line, the blockchain account can obtain a certain amount of digital currency when the account balance is less than the charge to be paid, and the amount is within the credit currency line, so that the charge to be paid can be paid for the service request in advance, realizing the processing of the service request quickly, and reimbursement of the credit currency line may be made later.

Alternatively, validating whether the sum of the account balance in the blockchain account and the credit currency line meets the payment condition according to the charge to be paid includes the following. It is validated whether the sum of the account balance in the blockchain account and the credit currency line is greater than or equal to the charge to be paid according to the charge to be paid.

The sum of the account balance and the credit currency line may refer to a total amount of digital currency available to the blockchain account within the credit currency line. When the sum of the account balance and the credit currency line is greater than or equal to the charge to be paid, it indicates that the total amount of digital currency at the disposal of the blockchain account is sufficient to pay the charge to be paid. Therefore, when the blockchain account is sufficient to pay the fee/charge to be paid, it is determined that the payment condition is satisfied, and it can be accurately determined that the blockchain account is capable to pay the fee to be paid.

By configuring the payment condition as comparing the sum of the account balance and the credit currency line with the charge to be paid, it is possible to accurately determine whether the amount of digital currency at the disposal of the blockchain account is sufficient to pay the charge to be paid, thereby it realized that the blockchain account uses the digital currency within the credit currency line for transaction, improving the accuracy of using the credit currency line, so as to realize an application scenario of processing the service request of the blockchain account first and paying later.

Alternatively, the method further includes the following. When a payment service request to the blockchain account is obtained, a digital currency with a negative amount in the blockchain account is eliminated according to a transferred digital currency with a positive amount in the payment service request.

The payment service request is used for the blockchain account to receive a digital currency. The payment service request may be obtained when other blockchain accounts transfer a certain amount of digital currency to the blockchain account. Generally, the amount of digital currency to be transferred in the payment service request is positive.

The transferred digital currency may be used to repay a prepaid amount associated with the credit currency line. When the blockchain account includes a digital currency with a negative amount, the transferred digital currency with a positive amount may be used to eliminate the negative digital currency. Elimination of the negative digital currency is actually to perform an account balance statistics operation when there is a digital currency with a negative amount and when a positive digital currency is transferred to the blockchain account.

The blockchain account includes at one digital currency, and may include at least one digital currency with a positive amount or at least one digital currency with a negative amount. If the amount of the transferred digital currency is less than an absolute value of the amounts of all negative digital currencies, a negative digital currency with the largest absolute value is selected to be eliminated, and a new digital currency with a negative amount is generated based on the transferred digital currency and the negative digital currency with the largest absolute value. If the amount of the transferred digital currency is equal to an absolute value of a negative digital currency, the negative digital currency is selected to be eliminated. If the amount of the transferred digital currency is greater than a cumulative result obtained by summing the absolute value of the amount of at least one negative digital currency, the at least one negative digital currency is selected to be eliminated, and a new digital currency is generated not generated based on a sum of the amount of the transferred digital currency and the cumulative result. If the sum of the amount of the transferred digital currency and the cumulative result is 0, no new digital currency is generated. If the sum of the amount of the transferred digital currency and the cumulative result is not 0, the new digital currency is generated, and the amount of the generated digital currency is equal to the sum of the amount of the transferred digital currency and the cumulative result.

In addition, if the amount in the blockchain account is positive, digital currency with a positive amount may directly transferred to the blockchain account. At this time, the account balance is the sum of the transferred digital currency and the original account balance.

The digital currency with a positive amount is transferred to the blockchain account through the payment service request, the digital currency with a positive amount can be used to eliminate the digital currency with a negative amount in the account balance, so that it realizes an account balance statistics operation when the account balance is negative and when the digital currency with a positive value is transferred to the blockchain account, improving the accuracy of account balance calculations.

At block 104, when the sum of the account balance and the credit currency line satisfies the payment condition, a digital currency to be paid is determined from the blockchain account, and the digital currency to be paid is transferred to a receiver account.

When the sum of the account balance and the credit currency line satisfies the payment condition, it indicates that the blockchain account is capable to pay the charge to be paid. The digital currency to be paid is used to pay the charge to be paid. The amount of the digital currency to be paid is the same as the charge to be paid. The payment process is detailed as follows: the digital currency to be paid is transferred to the receiver account from the blockchain account.

The receiver account may include: a transfer-out account associated with a transaction request when the service request is the transaction request for digital currency, the blockchain account is a transfer-in account; and/or a blockchain account matching the current block-producing node.

With the technical solution of the present disclosure, by validating the sum of the account balance and the pre-configured credit currency line when making a payment for the service request, when the validation is passed, the charge for processing the service request can be paid, so that the digital currency within the credit currency line is used for pre-payment when the account balance is insufficient, which solves the problem of the inability to use the blockchain network to process a service request caused when the account balance is insufficient in the related art, supporting flexible and changeable service scenarios, increasing the diversity of payment modes in the blockchain network, enabling advance credit payment, and improving the efficiency of blockchain network payment.

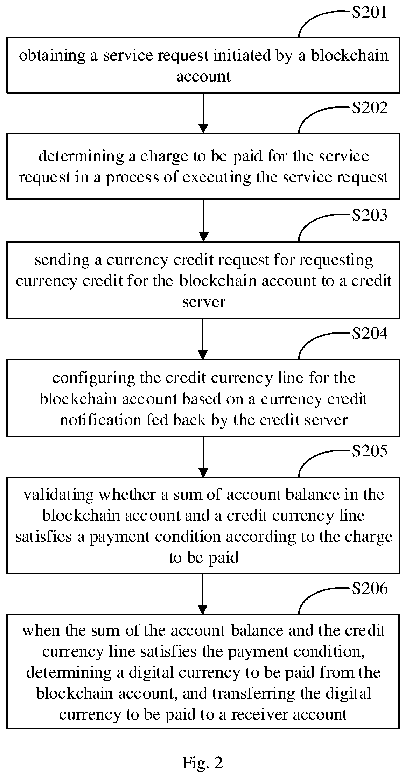

Fig. 2 is a flow chart of a payment processing method for a blockchain according to another embodiment of the present disclosure, which is further expanded based on the above technical solution, and can be combined with any of the above implementations.

At block S201, a service request initiated by a blockchain account is obtained.

For content that is not described in detail in this embodiment, reference may be made to the description in any of the above embodiments.

At block S202, a charge to be paid for the service request is determined in a process of executing the service request.

At block S203, a currency credit request for requesting currency credit for the blockchain account is sent to the credit server.

The credit server is used to allocate credit currency lines for respective blockchain accounts. The credit server can refer to a centralized server. For example, credit currency lines of all blockchain accounts are configured by one server.

The currency credit request is used for requesting the credit server to configure the credit currency line for each blockchain account. The currency credit request is initiated by a blockchain node. The currency credit request, used as a service request, is processed by a current block-producing node, and then a block is generated. The produced block is validated, and is added to the block chain for storage.

The currency credit request may include identification information and a credit parameter of the blockchain account. The identification information is used to identify the blockchain account, and the credit parameter is used by the credit server to determine a specific value of the credit currency line allocated to the blockchain account. For example, the credit parameter may include credit information of the blockchain account, a maximum value of the account balance, or transfer-in and transfer-out information, etc. The credit server can calculate the credit currency line of the blockchain account based on the identification information and the credit parameter of the blockchain account, and provide the credit currency line to the blockchain node to realize configuring the credit currency line for the blockchain account.

At block S204, the credit currency line is configured for the blockchain account based on a currency credit notification fed back by the credit server.

The currency credit notification is used by the credit server to notify the blockchain node the credit currency line allocated for the blockchain account by the credit server.

After receiving the currency credit notification, the blockchain node configures the credit currency line for the blockchain account and records it. In detail, the currency credit notification is feedback information received by the blockchain node. The currency credit notification, used as a service request, is processed by the current block-producing node, and then a block is generated. The produced block is validated, and is added to the block chain for storage. After the blockchain account is changed, the blockchain node can request the credit server again to obtain the credit currency line of the blockchain account for updating. Alternatively, it may periodically request the credit server to obtain the credit currency line of the blockchain account for updating.

In addition, for the currency credit request initiated by the blockchain account, a block may not need to be generated or added to the blockchain for storage. However, for the currency credit notification, a block is generated and added to the blockchain for storage.

The foregoing operation of requesting a credit line from the credit server may be completed at any time, and is not limited to requesting the credit after initiating the service request.

At block S205, it is validated whether a sum of account balance in the blockchain account and a credit currency line satisfies a payment condition according to the charge to be paid. The account balance is the amount of digital currency held by the blockchain account. The amount of digital currency may be positive or negative.

Alternatively, the digital currency is UTXO.

At block S206, when the sum of the account balance and the credit currency line satisfies the payment condition, a digital currency to be paid is determined from the blockchain account, and the digital currency to be paid is transferred to a receiver account.

Alternatively, determining the digital currency to be paid from the blockchain account and transferring the digital currency to be paid to a receiver account includes the following. A digital currency with a negative amount, within a range of the credit currency line of the blockchain account, is determined as the digital currency to be paid and transferred to the receiver account.

The digital currency with a negative amount is determined for paying the charge to be paid. An absolute value of the determined digital currency with a negative amount is less than or equal to the credit currency line. The digital currency with a negative amount determined within the credit currency line can be used as a digital currency at the disposal of the blockchain account in advance for a transaction. Generally, when the account balance of the blockchain account is less than the charge to be paid, i.e., when the account balance is insufficient to pay the charge to be paid, the digital currency with a negative amount of may be created. The receiver account serves as an account of a payee to receive the charge to be paid. In addition, the charge to be paid may also be transferred to an account associated with the current block-producing node.

The negative digital currency with an absolute value equal to the charge to be paid may be directly created as the digital currency to be paid, and transferred to the receiver account. If the account balance includes a digital currency with a positive amount, the created digital currency with a negative amount can be eliminated based on the digital currency with a positive amount. Thus, the account balance is updated to a sum of the digital currency with a negative amount and the digital currency with a positive amount in the account balance.

In addition, when the amount of the account balance is positive, the digital currency held by the account balance and the created digital currency with a negative amount are collectively used as the digital currency to be paid. A sum of an absolute value of the amount of the created digital currency and the amount of the digital currency held by the account balance is the same as the charge to be paid. At this time, the account balance is updated to the created amount, which is a negative value.

By creating the digital currency with a negative amount within the credit currency line for the blockchain account, transferring the created digital currency with a negative amount to the receiver account as the digital currency to be paid, the credit currency line can be converted into digital currency for transaction, the charge to be paid is paid by using the credit currency line, thereby realizing pre-credit payment and improving the accuracy of credit payment in the blockchain network.

Alternatively, the method further includes the following. When a balance query request for the blockchain account is obtained, a sum of digital currencies in the blockchain account is queried and obtained as the account balance, and the balance query request is responded according to the account balance. The account balance is a positive number, zero or a negative number.

The balance query request is used to query the account balance of the blockchain account. The blockchain account may include at least one digital currency or not include digital currency. Multiple digital currencies may be accumulated, and an accumulated result is used as the value of the account balance. When the blockchain account does not include digital currency, the account balance is 0.

For example, the digital currency includes a digital currency with an amount of -3 and a digital currency with an amount of -30, and the account balance is (-3) + (-30) = -33.

By performing accumulation calculation on the digital currencies in the blockchain account when the balance query request is received, the calculation result is used as the account balance, and the account balance is negative when the digital currency is negative, which supports the blockchain account to hold a negative digital currency, so that the blockchain account can prepay charges through the credit currency line when the blockchain account is insufficient to pay the charge, increasing the credit payment scenarios of the blockchain network, increasing the diversity of blockchain network payment, and improving the efficiency of blockchain network payment.

With the technical solution of the embodiment of the present disclosure, by configuring the credit currency line for the blockchain account through the credit server, when the account balance is insufficient for the payment, pre-payment is realized by using the digital currency within the credit currency line, thus increasing the credit payment scenarios of the blockchain network, increasing the diversity of blockchain network payment, and improving the efficiency of blockchain network payment.

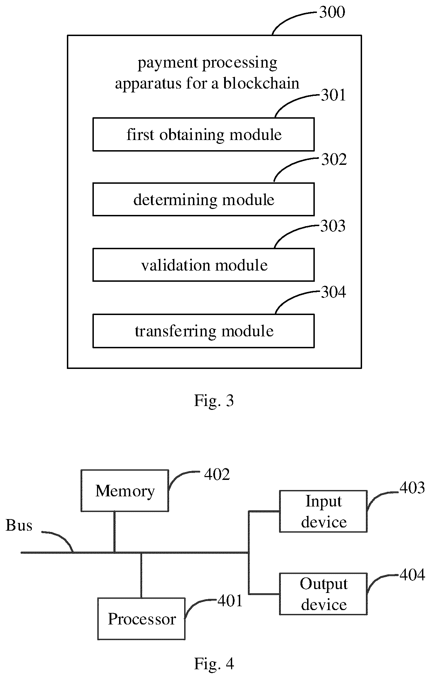

Fig. 3 is a block diagram of a payment processing apparatus for a blockchain according to an embodiment of the present disclosure. This embodiment may be applied to a situation where a node in a blockchain network uses account balance and credit currency line of a blockchain account to pay for a service request in a blockchain. The apparatus in this embodiment may be implemented in software and/or hardware, and can be configured on a blockchain node. The blockchain node can be deployed on an electronic device controlled by any unit or individual in the blockchain network.

As illustrated in Fig. 3, the payment processing apparatus 300 for a blockchain includes a first obtaining module 301, a determining module 302, a validation module 303, and a transferring module 304.

The first obtaining module 301 is configured to obtain a service request initiated by a blockchain account.

The determining module 302 is configured to determine a charge to be paid for the service request in a process of executing the service request.

The validation module 303 is configured to validate whether a sum of account balance in the blockchain account and a credit currency line satisfies a payment condition according to the charge to be paid. The account balance is an amount of digital currency held by the blockchain account, and the amount of digital currency may be positive or negative.

The transferring module 304 is configured to, when the sum of the account balance and the credit currency line satisfies the payment condition, determine a digital currency to be paid from the blockchain account, and transfer the digital currency to be paid to a receiver account.

Alternatively, the apparatus according to embodiments of the present disclosure may further includes a request module and a second obtaining module. The request module is configured to send a currency credit request for requesting currency credit for the blockchain account to a credit server. The second obtaining module is configured to configure the credit currency line for the blockchain account based on a currency credit notification fed back by the credit server.

Alternatively, the transferring module 304 includes a determining unit configured to determine a digital currency with a negative amount from a range of the credit currency line of the blockchain account as the digital currency to be paid and transfer the digital currency to be paid to the receiver account.

Alternatively, the digital currency is unspent transaction output (UTXO).

Alternatively, the apparatus further includes a query module, configured to, in response to obtaining a request for querying a balance of the blockchain account, query and obtain a sum of digital currencies in the blockchain account as the account balance, and respond to the request for querying the balance according to the account balance. The account balance is a positive number, zero or a negative number.

Alternatively, the validation module 303 includes a first statistics unit, configured to validate whether the sum of the account balance in the blockchain account and the credit currency line is greater than or equal to the charge to be paid.

Alternatively, the determining module 302 includes a second statistics unit, configured to, in the process of executing the service request, determine at least one of a charge to be transferred to a receiver for the service request and a service charge to be transferred to a current block-producing node as the charge to be paid.

Alternatively, the apparatus further includes a processing module, configured to, in response to obtaining a payment service request to the blockchain account, eliminate a digital currency with a negative amount in the blockchain account according to a transferred digital currency with a positive amount in the payment service request.

The payment processing apparatus for a blockchain according to embodiments of the present disclosure may perform the payment processing method applied to a blockchain node and a blockchain according to any embodiments of the present disclosure, and has corresponding function modules and beneficial effects for performing the method. The content not described in detail in this embodiment may refer to the descriptions in any method embodiments of the present disclosure.

According to embodiments of the present disclosure, the present disclosure further provides an electronic device and a computer-readable storage medium.

Fig. 4 is a schematic diagram of an electronic device for implementing the payment processing method for a blockchain according to an embodiment of the present disclosure. The electronic device is intended to represent various forms of digital computers, such as a laptop computer, a desktop computer, a workstation, a personal digital assistant, a server, a blade server, a mainframe computer, and other suitable computers. The electronic device can also represent various forms of mobile devices, such as personal digital processing, a cellular phone, a smart phone, a wearable device, and other similar computing devices. The components shown herein, their connections and relationships, and their functions are merely examples, and are not intended to limit the implementation of the present disclosure described and/or required herein.

As illustrated in Fig. 4, the electronic device includes one or more processors 401, a memory 402, and interfaces for connecting various components. The interfaces include a high-speed interface and a low-speed interface. The various components are connected to each other using different buses, and can be installed on a common mainboard or installed in other ways as needed. The processor may process instructions executed in the electronic device, including instructions stored in or on the memory to display graphical information of the GUI on an external input/output device (such as a display device coupled to an interface). In other embodiments, if necessary, multiple processors and/or multiple buses can be used together with multiple memories. Similarly, multiple electronic devices can be connected, and each device provides some necessary operations (for example, as a server array, a group of blade servers, or a multi-processor system). In Fig. 4, one processor 401 is taken as an example.

The memory 402 is the non-transitory computer-readable storage medium provided by the present disclosure. The memory stores instructions executable by the at least one processor, so that the at least one processor executes the payment processing method for a blockchain provided in the present disclosure. The non-transitory computer-readable storage medium of the present disclosure stores computer instructions, and the computer instructions are used to cause a computer to execute the payment processing method for a blockchain provided by the present disclosure.

As a non-transitory computer-readable storage medium, the memory 402 can be used to store non-transitory software programs, non-transitory computer-executable programs and modules, such as program instructions/modules (for example, the first obtaining module 301, the determining module 302, the validation module 303, and the transferring module 304 shown in Fig. 3) corresponding to the payment processing method for a blockchain in the embodiments of the present disclosure. The processor 401 executes various functional applications and data processing of the server by running the non-transitory software programs, instructions, and modules stored in the memory 402, that is, realizes the payment processing method for a blockchain in the foregoing method embodiment.

The memory 402 may also include a program storage area and a data storage area. The program storage area may store an operating system and an application program required by at least one function. The data storage area may store data created according to the use of the electronic device for payment processing of the blockchain, etc. In addition, the memory 402 may include a high-speed random access memory, and may also include a non-transitory memory, such as at least one magnetic disk storage device, a flash memory device, or other non-transitory solid-state storage devices. In some embodiments, the memory 402 may optionally include memories remotely provided with respect to the processor 401, and these remote memories may be connected to an electronic device for payment processing of the blockchain through a network. Examples of the aforementioned networks include, but are not limited to, the Internet, intranets, local area networks, mobile communication networks, and combinations thereof.

The electronic device for implementing the payment processing method for a blockchain may further include an input device 403 and an output device 404. The processor 401, the memory 402, the input device 403, and the output device 404 may be connected by a bus or in other ways. In Fig. 4, the connection via a bus is taken as an example.

The input device 403 can receive input numeric or character information, and generate key signal input related to the user settings and function control of the electronic device for the payment processing for a blockchain, such as input devices like a touch screen, a keypad, a mouse, a trackpad, a touchpad, a pointing stick, one or more mouse buttons, a trackball, a joystick, etc. The output device 404 may include a display device, an auxiliary lighting device (for example, a light-emitting diode (LED)), a tactile feedback device (for example, a vibration motor), and the like. The display device may include, but is not limited to, a liquid crystal display (LCD), a LED display, and a plasma display. In some embodiments, the display device may be a touch screen.

Various implementations of the systems and technologies described herein can be implemented in a digital electronic circuit system, an integrated circuit system, an application-specific ASIC (application-specific integrated circuit), computer hardware, firmware, software, and/or combinations thereof. These various embodiments may include: being implemented in one or more computer programs, the one or more computer programs may be executed and/or interpreted on a programmable system including at least one programmable processor, the programmable processor may be a dedicated or general-purpose programmable processor that can receive data and instructions from a storage system, at least one input device, and at least one output device, and transmit the data and instructions to the storage system, the at least one input device, and the at least one output device.

These computing programs (also called programs, software, software applications, or codes) include machine instructions for the programmable processors, and high-level processes and/or object-oriented programming languages, and/or asscmbly/machine language may be utilized to implement these calculation programs. As used herein, the terms "machine-readable medium" and "computer-readable medium" refer to any computer program product, apparatus, and/or device used to provide machine instructions and/or data to the programmable processor, such as, magnetic disks, optical disks, memory, programmable logic devices (PLD), including machine-readable media that receive machine instructions as machine-readable signals. The term "machine-readable signal" refers to any signal used to provide machine instructions and/or data to a programmable processor.

In order to provide interaction with the user, the systems and techniques described herein may be implemented on a computer having a display device (for example, a Cathode Ray Tube (CRT) or Liquid Crystal Display (LCD) monitor) for displaying information to the user; and a keyboard and pointing device (such as a mouse or trackball) through which the user can provide input into a computer. Other kinds of apparatuses may also be used to provide interaction with the user. For example, the feedback provided to the user may be any form of sensory feedback (for example, visual feedback, auditory feedback, or haptic feedback); and input from the user may be received in any form (including acoustic input, voice input, or tactile input).

The systems and technologies described herein can be implemented in a computing system including background components (for example, as a data server), a computing system including middleware components (for example, an application server), or a computing system including front-end components (for example, a user computer with a graphical user interface or a web browser, through which the user can interact with the implementation of the systems and technologies described herein), or a computer system including any combination of such background components, middleware components, and front-end components. The components of the system may be interconnected by any form or medium of digital data communication (such as, a communication network). Examples of communication networks include: a local area network (LAN), a wide area network (WAN), and the Internet.

The computer system may include clients and servers. The client and server are generally remote from each other and typically interact through a communication network. The client-server relation is generated by computer programs running on the respective computers and having a client-server relation with each other.

With the technical solution of the present disclosure, by validating the sum of the account balance and the pre-configured credit currency line when making a payment for the service request, when the validation is passed, the charge for processing the service request can be paid, so that the digital currency within the credit currency line is used for pre-payment when the account balance is insufficient, which solves the problem of the inability to use the blockchain network to process a service request caused when the account balance is insufficient in the related art, supporting flexible and changeable service scenarios, increasing the diversity of payment modes in the blockchain network, enabling advance credit payment, and improving the efficiency of blockchain network payment.

It should be understood that the various forms of flows shown above can be used to reorder, add, or delete steps. For example, the steps disclosed in the present application can be executed in parallel, sequentially, or in different orders. As long as the desired results of the technical solutions disclosed in the present application can be achieved, there is no limitation herein.

The foregoing specific embodiments do not constitute a limitation on the protection scope of the present application. It should be understood by those skilled in the art that various modifications, combinations, sub-combinations, and substitutions may be made according to design requirements and other factors. Any modification, equivalent replacement and improvement made within principle of this application shall be included in this application.

## Claims

1. A payment processing method for a blockchain, applied to a blockchain node and comprising:
obtaining (S101, S201) a service request initiated by a blockchain account;
determining (S102, S202) a charge to be paid for the service request in a process of executing the service request;
validating (S103, S205) whether a sum of account balance in the blockchain account and a credit currency line satisfies a payment condition according to the charge to be paid, wherein the account balance is an amount of digital currency held by the blockchain account, and the amount of digital currency is positive or negative; and
when the sum of the account balance and the credit currency line satisfies the payment condition, determining (S104, S206) a digital currency to be paid from the blockchain account, and transferring the digital currency to be paid to a receiver account.

2. The method of claim 1, further comprising:
sending (S203) a currency credit request for requesting currency credit for the blockchain account to a credit server; and
configuring (S204) the credit currency line for the blockchain account based on a currency credit notification fed back by the credit server.

3. The method of claim 1 or 2, wherein determining (S104, S206) the digital currency to be paid from the blockchain account and transferring the digital currency to be paid to a receiver account comprises:
determining a digital currency with a negative amount from a range of the credit currency line of the blockchain account as the digital currency to be paid and transferring the digital currency to be paid to the receiver account.

4. The method of any of claims 1 to 3, further comprising:
in response to obtaining a request for querying a balance of the blockchain account, querying and obtaining a sum of digital currencies in the blockchain account as the account balance, and responding to the request for querying the balance according to the account balance, wherein the account balance is a positive number, zero or a negative number.

5. The method of any of claims 1 to 4, wherein validating (S103, S205) whether the sum of account balance in the blockchain account and the credit currency line satisfies the payment condition according to the charge to be paid comprises:
validating whether the sum of the account balance in the blockchain account and the credit currency line is greater than or equal to the charge to be paid.

6. The method of any of claims 1 to 5, wherein determining (S102, S202) the charge to be paid for the service request in the process of executing the service request comprises:
in the process of executing the service request, determining at least one of a charge to be transferred to a receiver for the service request and a service charge to be transferred to a current block-producing node as the charge to be paid.

7. The method of any of claims 1 to 6, further comprising:
in response to obtaining a payment service request to the blockchain account, eliminating a digital currency with a negative amount in the blockchain account according to a transferred digital currency with a positive amount in the payment service request.

8. A payment processing apparatus (300) for a blockchain, configured on a blockchain node and comprising:
a first obtaining module (301), configured to obtain a service request initiated by a blockchain account;
a determining module (302), configured to determine a charge to be paid for the service request in a process of executing the service request;
a validation module (303), configured to validate whether a sum of account balance in the blockchain account and a credit currency line satisfies a payment condition according to the charge to be paid, wherein the account balance is an amount of digital currency held by the blockchain account, and the amount of digital currency is positive or negative; and
a transferring module (304), configured to, when the sum of the account balance and the credit currency line satisfies the payment condition, determine a digital currency to be paid from the blockchain account, and transfer the digital currency to be paid to a receiver account.

9. The apparatus of claim 8, further comprising:
a request module, configured to send a currency credit request for requesting currency credit for the blockchain account to a credit server; and
a second obtaining module, configured to configure the credit currency line for the blockchain account based on a currency credit notification fed back by the credit server.

10. The apparatus of claim 8 or 9, wherein the transferring module (304) comprises:
a determining unit, configured to determine a digital currency with a negative amount from a range of the credit currency line of the blockchain account as the digital currency to be paid and transfer the digital currency to be paid to the receiver account.

11. The apparatus of any of claims 8 to 10, further comprising:
a query module, configured to, in response to obtaining a request for querying a balance of the blockchain account, query and obtain a sum of digital currencies in the blockchain account as the account balance, and respond to the request for querying the balance according to the account balance, wherein the account balance is a positive number, zero or a negative number.

12. The apparatus of any of claims 8 to 11, wherein the validation module (303) comprises:
a first statistics unit, configured to validate whether the sum of the account balance in the blockchain account and the credit currency line is greater than or equal to the charge to be paid.

13. An electronic device, comprising:
at least one processor; and
a memory communicatively connected with the at least one processor;
wherein, the memory has instructions executable by the at least one processor stored thereon that, when executed by the at least one processor, cause the at least one processor to perform the method of any of claims 1 to 8.

14. A non-transitory computer-readable storage medium storing computer instructions, wherein the computer instructions are used to make the computer execute the method of any of claims 1-7.

15. A computer program product having computer instructions stored thereon, wherein the computer instructions are used to cause the computer to execute the method of any of claims 1-7.
